# EUROPEAN PATENT SPECIFICATION

(11) **EP 4 322 302 B1**
(45) Date of publication and mention of the grant of the patent: **31.12.2025**
(21) Application number: 23792115.0
(22) Date of filing: 14.04.2023
(51) Int. Cl.: H01M 50/317, H01M 50/333, H01M 50/342, H01M 50/15, H01M 50/184, H01M 50/211

(54) **VENTING DEVICE AND PRISMATIC SECONDARY BATTERY PROVIDED WITH SAME**
ENTLÜFTUNGSVORRICHTUNG UND DAMIT AUSGESTATTETE PRISMATISCHE SEKUNDÄRBATTERIE
DISPOSITIF DE VENTILATION ET BATTERIE SECONDAIRE PRISMATIQUE LE COMPRENANT

(30) Priority: 18.04.2022 KR 20220047703
(43) Date of publication of application: 14.02.2024
(73) Proprietor: LG Energy Solution, Ltd., Seoul 07335 (KR)
(72) Inventor: LEE, Yong Ho, Daejeon 34122 (KR); LEE, Jin Kyu, Daejeon 34122 (KR); YOON, Doo Han, Daejeon 34122 (KR)
(74) Representative: Plasseraud IP
(86) International application number: PCT/KR2023/005132
(87) International publication number: WO 2023/204538

(56) References cited:
- KR-A- 20140 066 998
- KR-A- 20200 013 989
- KR-A- 20200 032 314
- KR-A- 20220 008 602
- KR-A- 20220 043 646
- KR-B1- 101 182 284
- US-A1- 2013 052 497
- US-A1- 2021 175 576

## Description

### [Technical Field]

The present invention relates to a venting device that can prevent structural collapse due to a rise in the internal pressure of the secondary battery, and a prismatic secondary battery provided with the same.

This application claims the benefit of priority based on Korean Patent Application No. 10-2022-0047703, filed on April 18, 2022.

### [Background Art]

Unlike primary batteries, secondary batteries are rechargeable and have been extensively researched and developed recently due to potential for miniaturization and high-capacity applications. With the increasing technological advancements and demand for mobile devices, as well as the growing prominence of electric vehicles and energy storage systems in response to environmental concerns, the demand for secondary batteries as an energy source are rapidly and significantly increasing.

Depending on the shape of the battery case, secondary batteries are classified into coin-shaped batteries, cylindrical batteries, prismatic batteries, and pouch-type batteries. The electrode assembly, which is installed inside the battery case in secondary batteries, is a power generation element capable of charge and discharge. It stacks of a stacked structure of electrodes and separators.

Since secondary batteries are required to be used continuously for a long period of time, it is necessary to effectively control the heat generated during the charging and discharging process. In addition, if the secondary battery is overcharged or an external short circuit occurs and an overcurrent is applied, the increase in current causes the temperature to rise, and the increase in temperature causes the current to increase again, resulting in a feedback chain reaction that eventually leads to the catastrophic condition of thermal runaway.

When thermal runaway occurs in a secondary battery, hot-temperature gases and particles are generated and the internal pressure rises. In such situation, it is necessary to prevent the structural collapse of the secondary battery by properly discharging the pressure inside the secondary battery, and a venting device is provided for this purpose. The venting device is normally closed to prevent the penetration of external foreign substances or water, but when the internal pressure of the secondary battery rises above the criterion, it is opened in conjunction with thereto to discharge high-temperature gases and particles to the outside.

The high-temperature particles discharged by the venting device, such as heating electrodes, can be a cause of external ignition, so it is necessary to properly control the discharge of high-temperature particles. However, if the discharge of high-temperature particles is severely suppressed, the structure of the secondary battery may collapse as the internal pressure is not properly resolved, causing even greater damage.

Therefore, it is necessary to develop a venting device that can properly compromise between suppressing the emission of ignition sources that can cause external fires and relieving the pressure inside the secondary battery.

### [Related Art Documents]

(Patent document 1) U.S. Patent Publication No. 2017-0187020 (published on June 29, 2017). US2021175576A1 discloses a rechargeable battery that includes: an electrode assembly; a case for receiving the electrode assembly; a cap plate combined to an opening of the case to close and seal an inside of the case and including a plurality of vent units; an elevation member penetrated and installed in the cap plate and moving by an internal pressure of the case; and a plurality of vent plates for closing and sealing the respective vent units, wherein the vent plate is connected to the elevation member through a connection member and links to the elevation member.

### [Description of the Invention]

### [Technical Problem]

The present invention is directed to providing a venting device that can properly compromise between suppressing the emission of ignition sources generated by thermal runaway and relieving the pressure inside the secondary battery.

### [Technical Solution]

The present invention relates to a venting device, comprising: a fixed member provided with a through-hollow body, and provided with a first stepped part on an inner circumferential surface of an upper portion of the body; a movable member inserted into and movably coupled to an inside of the fixed member, and provided with a plurality of venting holes, and provided with a second stepped part on a lower outer circumferential surface of the movable member facing the first stepped part; and a gap-maintaining member exerting a repulsive force between the fixed member and the movable member, wherein the movable member is movable relative to the fixed member between a first position maintained by the repulsive force exerted by the gap-maintaining member, and a second position when an external force exceeding the repulsive force is applied, and a number of venting holes in the movable member connecting with the outside in the first position and a second position is different.

In one exemplary embodiment of the present invention, the gap-maintaining member includes a first magnet provided on the fixed member and a second magnet provided on the movable member.

The first magnet may be provided on the first stepped part, and the second magnet may be provided on the second stepped part.

According to another embodiment of the present invention, the gap-maintaining member includes an elastic member installed on at least one of the first stepped part and the second stepped part.

For example, the elastic member may be a leaf spring.

Meanwhile, the plurality of venting holes includes at least one first venting hole connecting to the outside at both the first and second positions, and at least one second venting hole connecting to the outside only at the second position.

In one embodiment of the present invention, the at least one first venting hole is disposed on an upper surface of the movable member.

In addition, the at least one second venting hole is disposed on a side surface of the movable member.

Further, the at least one first venting hole is a plurality of first venting holes and the at least one second venting hole is a plurality of second venting holes, and a cross-sectional area of each second venting hole may be designed to be larger than a cross-sectional area of each first venting hole.

On the other hand, the venting device of the present invention may further include a barrier coupled to the fixed member to support a lower surface of the movable member.

According to an embodiment of the present invention, the barrier may be an impermeable fiber or a metal foil.

Here, a breaking strength of the barrier may be less than the repulsive force.

In addition, the at least one first venting hole is a plurality of first venting holes, and the upper surface of the movable member may be provided with one or more fracture portions surrounding the plurality of first venting holes, and the fracture portions fracturing upon application of a force in excess of the external force that moves the movable member to the second position.

Meanwhile, the present invention may provide a prismatic secondary battery including: a case, at least one side of which forms an open surface; at least one battery cell housed within the case; an electrode terminal electrically connected to an electrode lead of the at least one battery cell; a terminal plate coupled to the open surface of the case; and a venting device of the above configuration coupled to the terminal plate.

Further, an O-ring may be interposed between an engagement surface of the terminal plate and the venting device.

### [Advantageous Effects]

In the venting device of the present invention having the above configuration, the number of venting holes, in other words, the cross-sectional area of the venting channels, is varied according to the internal pressure generated inside the secondary battery. Accordingly, by varying the number of venting holes in response to the intensity of thermal runaway, the pressure inside the secondary battery can be appropriately relieved while suppressing excessive discharge of the high-temperature ignition source.

Furthermore, the venting device of the present invention is designed with different cross-sectional areas of the plurality of venting holes for each venting area, and the venting holes with larger cross-sectional areas are configured to be connected to the outside when the intensity of thermal runaway becomes stronger. Therefore, it is possible to prevent the structural collapse of the secondary battery by quickly relieving the internal pressure when the thermal runaway intensifies, and to properly limit the particle size of the discharged high-temperature ignition source.

### [Description of Drawings]

However, the following drawings attached to the present specification illustrate exemplary embodiments of the present invention and serve to further assist understanding of the technical idea of the present invention together with the detailed description of the present invention, which will be described below, so that the present invention should not be construed as being limited to details shown in the accompanying drawings.
FIG. 1 is an exploded perspective view of a venting device 10 according to one embodiment of the present invention.
FIG. 2 is a perspective view illustrating a state in which the venting device 10 of the present invention is in a first position.
FIG. 3 is a cross-sectional view according to the "A-A" cutting line of FIG. 2.
FIG. 4 is a perspective view showing a state in which the venting device of the present invention is in a second position.
FIG. 5 is a cross-sectional view according to the "B-B" cutting line of FIG. 4.
FIG. 6 is a drawing of a gap-maintaining member according to another embodiment.
FIG. 7 is a cross-sectional view of the venting device 10 according to another embodiment of the present invention.
FIG. 8 is an enlarged view of the upper surface of a movable member according to another embodiment of the present invention.
FIG. 9 is a drawing illustrating an example of a prismatic secondary battery equipped with the venting device of the present invention.
FIG. 10 is a cross-sectional view along the "C-C" cutting line of FIG. 9

### [Best mode]

The present invention may be modified into various forms and may have a variety of embodiments, and, therefore, specific embodiments will be described in detail below.

In the present invention, the terms "comprising," "having," or the like are used to specify that a feature, a number, a step, an operation, a component, an element, or a combination thereof described herein exists, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in the present application, as being disposed "on" may include the case of being disposed not only on an upper portion but also on a lower portion.

The present disclosure relates to a venting device provided with a through-hollow body, a fixed member provided with a first stepped part on an inner circumferential surface of the upper portion of the body, a movable member inserted into and coupled to the inside of the fixed member and provided with a plurality of venting holes, a second stepped part on a lower portion circumferential surface facing the first stepped part, and a gap-maintaining member that exerts a repulsive force between the fixed member and the movable member.

Here, the movable member is movable, relative to the fixed member, between a first position maintained by a repulsive force exerted by the gap-maintaining member and a second position when an external force exceeding the repulsive force is applied, and is characterized in that the number of venting holes in the movable member connected to the outside from the first and second positions, and the number of venting holes of the movable member is different.

The venting device of the present invention with the above configuration varies the number of venting holes, i.e., the cross-sectional area of the venting channels, according to the internal pressure generated inside the secondary battery. Accordingly, by varying the number of venting holes in response to the intensity of thermal runaway, the pressure inside the secondary battery can be properly relieved while suppressing excessive discharge of the high-temperature ignition source.

### [Modes of the Invention]

Hereinafter, a specific embodiment of the present invention will be described in detail with reference to the accompanying drawings. For reference, the directions of front, back, up, down, left and right designating relative positions used in the following description are intended to aid in the understanding of the present invention, and refer to the directions shown in the drawings unless otherwise defined.

### [First embodiment]

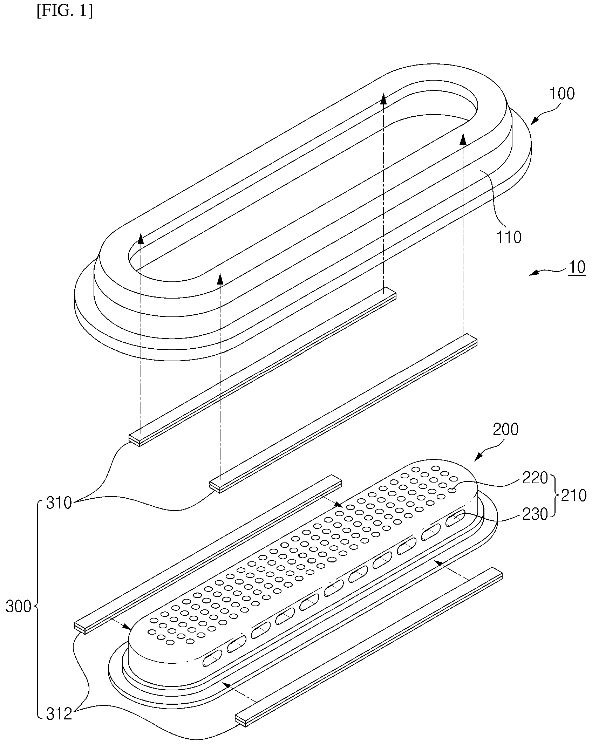

FIG. 1 is an exploded perspective view of a venting device 10 according to one embodiment of the present invention, with reference to FIG. 1, a first embodiment of the present invention will be described in detail.

The present invention relates to a venting device 10, which serves to mitigate a rise in the internal pressure caused by a thermal runaway inside a case 510 of a secondary battery 500. The venting device 10 of the present invention includes a fixed member 100, a movable member 200, and a gap-maintaining member 300 interposed between the fixed member 100 and the movable member 200.

The fixed member 100 is provided with a through-hollow body 110 and is a part comprising the main body of the venting device 10. The movable member 200 is inserted into and coupled to the space formed inside the through-hollow body 110, and a first stepped part 120 is provided on the inner circumferential surface of the upper portion of the body 110.

The movable member 200, which is coupled to the hollow portion inside the fixture member 100 to allow for upward and downward movement, is provided with a plurality of venting holes 210. The plurality of venting holes 210 are channels for discharging hot gases and particles generated in the battery cell 520 inside the secondary battery 500 to the outside, and also serve as filters for filtering out particles which size exceeds the diameter of the venting holes 210. The lower outer circumferential surface of the movable member 200 is provided with a second stepped part 240 facing the first stepped part 120 of the fixed member 100.

For reference, the fixed member 100 and the movable member 200 can be moved relative to each other, where the fixed member 100 is the non-movable part of the venting device 10 installed in the secondary battery 500, and the movable part corresponds to the movable member 200.

Further, the gap-maintaining member 300 is configured to exert a repulsive force between the fixed member 100 and the movable member 200. In other words, the gap-maintaining member 300 exerts a force in the direction of pushing the fixed member 100 and the movable member 200 from each other.

Here, the term repulsive force does not only refer to repulsive forces in the form of electric and magnetic forces, but also includes any force that acts in the direction of pushing the fixed member 100 and the movable member 200 from each other in a broader sense. For example, an elastic force caused by elastic deformation that acts in the direction of pushing the fixed member 100 and the movable member 200 from each other is also included in the scope of the repulsive force referred to in the present invention.

By using such gap-maintaining members 300, the relative position of the movable member 200 with respect to the fixed member 100 can be varied. More specifically, the relative position of the movable member 200 may vary according to the balance of forces between the internal pressure of the secondary battery 500 acting on the venting device 10 and the repulsive force of the gap-maintaining member 300.

The movable member 200 is movable between a first position P1 maintained by the repulsive force exerted by the gap-maintaining member 300 and a second position P2 when an external force exceeding the repulsive force of the gap-maintaining member 300 (e.g., an external force exerted by the internal pressure of the secondary battery) is applied.

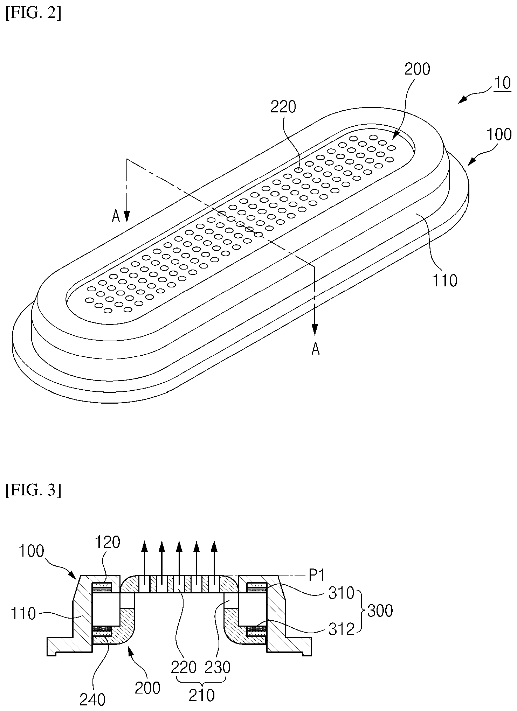

FIG. 2 is a perspective view illustrating a state in which the venting device 10 of the present invention is in a first position P1, and FIG. 3 is a cross-sectional view according to the "A-A" cutting line of FIG. 2. As shown in the drawings, under normal conditions when there is no external force exceeding the repulsive force of the gap-maintaining member 300, the movable member 200 inserted into and coupled to the inside of the fixed member 100 does not protrude, and the upper surface of the movable member 200 is almost the same as the upper surface of the fixed member 100. Accordingly, in the first position P1, the venting hole 210 disposed on the externally exposed upper surface of the movable member 200, in other words, only the first venting hole 220 is in connection with the outside.

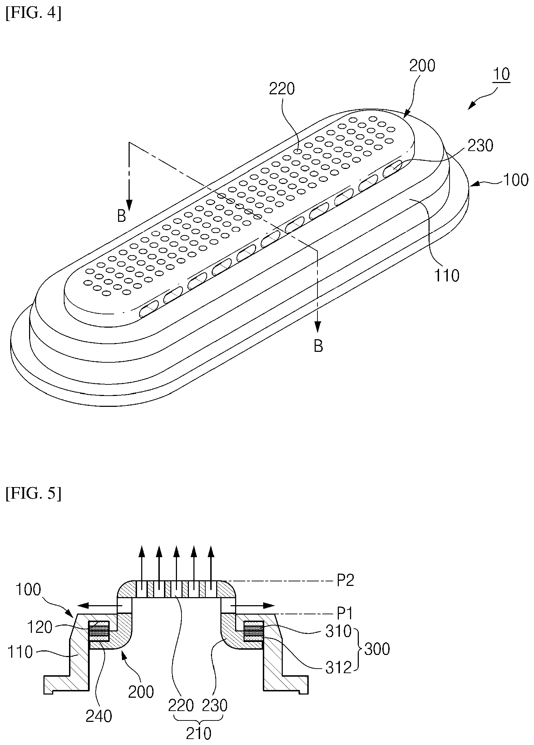

On the contrary, FIG. 4 is a perspective view showing a state in which the venting device 10 of the present invention is in a second position P2, and FIG. 5 is a cross-sectional view according to the "B-B" cutting line of FIG. 4. The second position P2 is the final movement position when the movable member 200 is subjected to an external force exceeding the repulsive force of the gap-maintaining member 300, and the movable member 200 is protruded from the fixed member 100 by the external force exceeding the repulsive force. Accordingly, the venting holes 210 disposed on the side surface of the movable member 200, i.e., the second venting holes 230 are exposed to the outside, and the first venting hole 220 and the second venting hole 230, which were hidden in the fixed member 100, are also connected to the outside.

As a result, the venting device 10 of the present invention has a different number of venting holes 210 of the movable member 200 that connect with the outside at the first position P1 and the second position P2, respectively. In other words, the venting device 10 of the present invention is provided with two types of plurality of venting holes 210 in the movable member 200: a first venting hole 220 that connects to the outside at both the first position P1 and the second position P2, and a second venting hole 230 that connects to the outside only at the second position P2.

For reference, the first position P1 and the second position P2 correspond to the lower and upper position of the movable member 200, respectively, and that the movable member 200 may be positioned at a position between the first position P1 and the second position P2 according to the balance of force between the repulsive force of the spacer 300 and the external force. Furthermore, as the external force changes, the position of the force balance also changes, thus the movable member 200 may move up or down between the first position P1 and the second position P2.

In addition, the first stepped part 120 of the fixed member 100 and the second stepped part 240 of the movable member 200 facing each other function as a stopper that determines the second position P2 of the movable member 200. In other words, the first and second stepped parts 120, 240 prevent the movable member 200 from moving out beyond the second position P2.

Meanwhile, the first venting hole 220 and the second venting hole 230 may be provided in plurality, respectively, and each cross-sectional area of the second venting hole 230 may be designed to be larger than each cross-sectional area of the first venting hole 220. For example, the first venting hole 220 may be formed as a circular hole with a diameter of 1.2 mm, and the second venting hole 230 may be formed as a long hole with the width and height of 4.3×1.8 mm. The second venting hole 230 may be opened when the degree of thermal runaway of the battery cell 520 becomes intense and the internal pressure rises above a repulsive force, in which case the smaller holes (e.g., the first venting hole with a diameter of 1.2 mm) are likely to be blocked due to the enlarged and large amount of high-temperature particles. If the venting hole 210 is blocked, the internal pressure in the secondary battery 500 may not be mitigated and may cause structural collapse of the secondary battery 500, so safety may be improved by forming a larger cross-sectional area of the second venting hole 230.

Further, in one embodiment of the present invention, the gap-maintaining member 300 includes a first magnet 310 provided on the fixed member 100 and a second magnet 312 provided on the movable member 200. As shown, the first magnet 310 may be provided on the first stepped part 120 of the fixed member 100, and the second magnet 312 may be provided on the second stepped part 240 of the movable member 200. The first magnet 310 and the second magnet 312 are obviously disposed with the same stimulus facing each other, in order to have a repulsive force acting between the first magnet 310 and the second magnet 312.

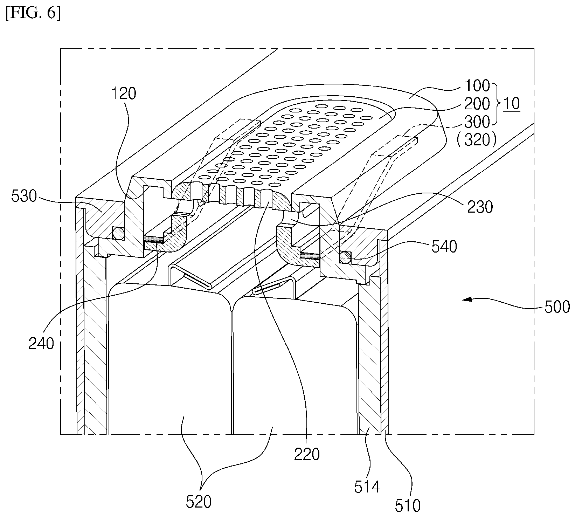

According to another embodiment of the present invention, the spacing member 300 includes an elastic member installed on at least one of the first stepped part 120 and the second stepped part 240. An example of the gap-maintaining member 300 which is such an elastic member is shown in FIG. 6. An example of the elastic member shown in FIG. 6 is a leaf spring 320, which is interposed between the first stepped part 120 and the second stepped part 240 to generate a repulsive force that pushes the two sides from each other. In addition, various other elastic members such as coil springs, rubber blocks, highly elastic sponges, etc. may also be adopted as the spacing member 300.

### [Second embodiment]

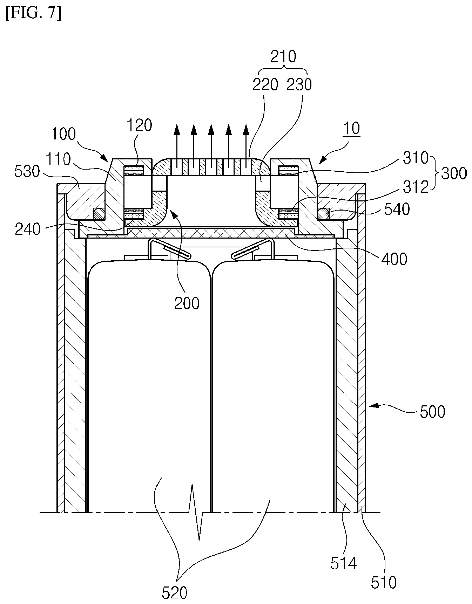

FIG. 7 is a cross-sectional view of the venting device 10 according to another embodiment of the present invention. In a second embodiment of the present invention, the venting device 10 further includes a barrier 400 that is coupled to the fixed member 100 and supports the lower surface of the movable member 200.

The role of the barrier 400 is primarily to prevent the penetration of foreign substances and water into the inside of the secondary battery 500. As described in the first embodiment, the first venting hole 220 provided on the upper surface of the movable member 200 is configured to be in constant connection with the outside. Therefore, a barrier 400 is provided on the lower portion of the fixed member 100 to prevent penetration of various foreign substances and water into the secondary battery 500 through the first venting hole 220.e

Furthermore, another role of the barrier 400 is to prevent the movable member 200 from moving away from the lower portion of the fixed member 100. When the venting device 10 of the present invention is mounted on the secondary battery 500, there is almost no space left inside the secondary battery 500 due to the storage of various parts such as the battery cells 520, etc. therefore, there is no need to worry about the movable member 200 falling to the lower portion. However, there is a possibility that the movable member 200 may fall out during a process such as transporting a single piece of the venting device 10, etc., but the barrier 400 can play a role in preventing such risk.

In the second embodiment of the present invention, the barrier 400 may be an impermeable fiber (e.g., product name Gore-Tex fiber, etc.) or a metal foil formed with vulnerable portions. Such materials make the barrier 400 effective in preventing water penetration.

Furthermore, it may be preferable that the breaking strength of such an impermeable barrier 400 is less than the repulsive force exerted on the gap-maintaining member 300. This is because the barrier 400 acts as a bulkhead between the inside of the secondary battery 500 and the venting device 10, and therefore, the barrier 400 needs to fracture or rupture at an appropriate pressure to prevent the internal pressure of the secondary battery 500 from interacting with a repulsive force inside the venting device 10.

In addition, fracture of such an impermeable barrier 400 would have to occur at a force that is at least smaller than the repulsive force generated by the gap-maintaining member 300. This is because if the barrier 400 were to break at a force greater than the repulsive force, it would cause an undesired delay in the movement of the movable member 200 to the second position P2. The breaking strength of the impermeable fiber can be controlled by the thickness of the fiber (weight per unit area) or by post-processing, and the metal foil can be controlled by vulnerable portion such as notches.

In a modified embodiment, the barrier 400 may be configured to melt in response to temperature, rather than breaking in response to pressure, so that it is unblocked at the appropriate time. Since a rise in pressure inside the secondary battery 500 is coupled to a rise in temperature (thermal runaway), the same function can be achieved by allowing the barrier 400 to melt at a temperature condition corresponding to the breaking strength. The material of the temperature impermeable barrier 400 may be appropriately selected by considering the melting point as a dominant factor.

### [Third embodiment]

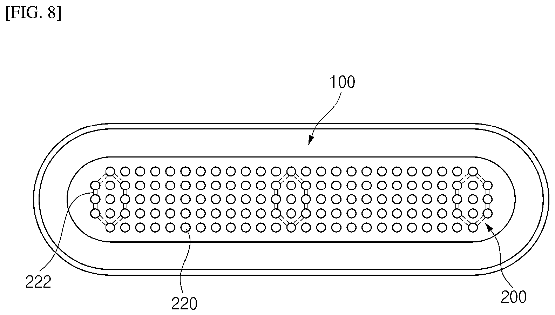

FIG. 8 is an enlarged view of the upper surface of a movable member 200 according to a third embodiment of the present invention.

The venting device 10 of the present invention has a plurality of venting holes 210, i.e., a first venting hole 220 and a second venting hole 230, which serve as filters to filter out particles which size exceeds the diameter. By appropriately designing the cross-sectional area of the plurality of venting holes 210, a risk of an external fire can be reduced by filtering out large high-temperature particles from the venting device 10.

However, if the venting device 10 filters a large amount of particles generated from the battery cell 520, there is a risk that the filtered particles may remain in the venting device 10 and block the venting holes 210. Blocking of the venting holes 210 causes an excessive rise in pressure inside the secondary battery 500, and the unrelieved internal pressure can lead to structural collapse of the secondary battery 500.

A third embodiment of the present invention is intended to prevent a dangerous situation in which the venting holes 210 become blocked, and for this purpose, the upper surface of the movable member 200 is provided with one or more fracture portions 222 surrounding the plurality of first venting holes 220. The fracture portions 222 may be formed as grooves or notches of suitable depth, with interconnected fracture portions 222 forming a single closed shape. The cross-sectional area of the closed shape formed by the fracture portions 222 is thus much larger than each of the first venting holes 220, and the new passageways created by the fracture portions 222 mitigate a rise in excessive pressure in the secondary battery 500.

Here, it would be appropriate for the fracture portion 222 to fracture when a force is applied that exceeds the external force that moves the movable member 200 to the second position P2. This criterion is a minimum requirement, and ultimately, any threshold value selected between a force that exceeds the external force that moves the movable member 200 to the second position P2 and a force that results in structural collapse of the secondary battery 500 will correspond to a practical fracture condition.

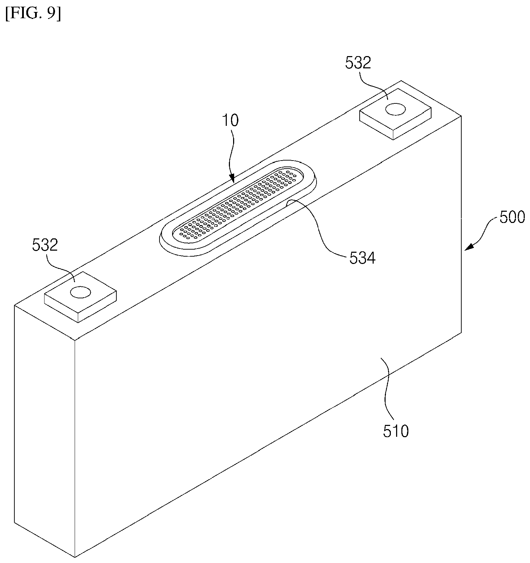

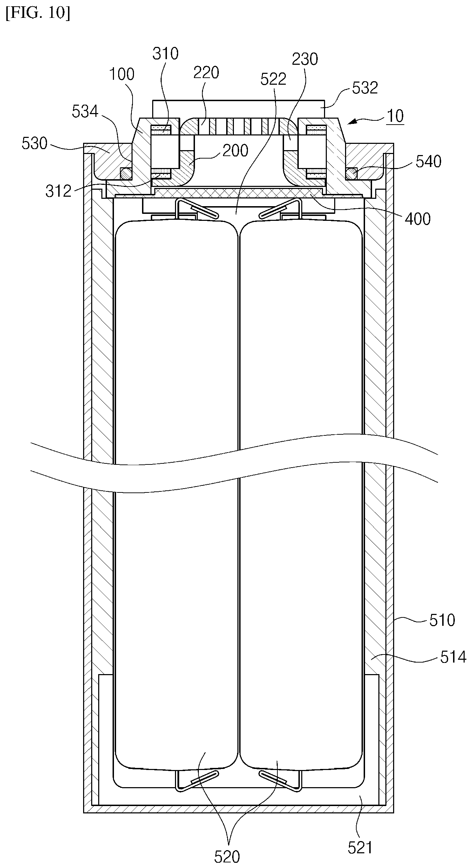

Meanwhile, FIG. 9 is a drawing of an example of a prismatic secondary battery 500 equipped with the venting device 10 of the present invention, and FIG. 10 is a cross-sectional view along the "C-C" cutting line of FIG. 9 showing an example of a secondary battery 500 with the venting device 10 of the present invention.

Illustrated herein is a prismatic secondary battery 500, including a case 510 provided with any one side (upper side in the drawings) forming an open surface, and at least one battery cell 520 encased within the case 510, a terminal plate 530 coupled to the open surface of the case 510, provided with electrode terminals 532 electrically connected to electrode leads 522 of the battery cell 520, and the venting device 10 of the present invention coupled to the terminal plate 530.

To briefly describe the internal configuration of the prismatic secondary battery 500 with reference to FIG. 10, two pouch cells are housed within a guide block 512 that is bent into a " U " shape, and an insulation material 514 is fitted to the outer surface of the pouch cells. Additionally, a busbar (not shown) is coupled to the electrode leads 522 of the pouch cells, and the prepared pouch cell assembly is housed in the case 510.

The venting device 10 is inserted into a through hole 534 provided in the center of the terminal plate 530, and the terminal plate 530 with which the venting device 10 is engaged is mechanically coupled against the open surface of the case 510 while the electrode terminals 532 are electrically connected to the busbar, thereby completing the prismatic secondary battery 500.

Furthermore, as shown in FIG. 10, the seal of the prismatic secondary battery 500 can be strengthened by providing an O-ring 540, which is a sealing means, on the engagement surface of the terminal plate 530 and the venting device 10.

**[Description of Reference Numerals]**

| | | | |
|---|---|---|---|
| 10: | venting device | 100: | fixed member |
| 110: | body | 120: | first stepped part |
| 130: | movable member | 210: | venting hole |
| 220: | first venting hole | 222: | fracture portion |
| 230: | second venting hole | 240: | second stepped part |
| 300: | gap-maintaining member | 310: | first magnet |
| 312: | second magnet | 320: | leaf spring (elastic member) |
| 400: | barrier | 500: | secondary battery |
| 510 : | case | 512: | guide block |
| 514 : | insulation material | 520: | battery cell |
| 522 : | electrode lead | 530: | terminal plate |
| 532 : | electrode terminal | 534: | through hole |
| 540 : | O-ring | P1: | first position |
| P2: | second position | | |

## Claims

1. A venting device (10), comprising:
a fixed member (100) provided with a through-hollow body (110) , and provided with a first stepped part (120) on an inner circumferential surface of an upper portion of the body (110);
a movable member (130) inserted into and movably coupled to an inside of the fixed member (100), and provided with a plurality of venting holes (210); and
a second stepped part (240) on a lower outer circumferential surface of the movable member (130) facing the first stepped part (120); and
a gap-maintaining member (300) exerting a repulsive force between the fixed member (100) and the movable member (130),
wherein the movable member (130) is movable relative to the fixed member (100) between a first position maintained by the repulsive force exerted by the gap-maintaining member (300), and a second position when an external force exceeding the repulsive force is applied, and
wherein a number of venting holes in the movable member (130) connecting with the outside in the first position (P1) and second position (P2) is different.

2. The venting device of claim 1, wherein the gap-maintaining member comprises a first magnet (310) provided on the fixed member and a second magnet (312) provided on the movable member.

3. The venting device of claim 2, wherein the first magnet (310) is provided on the first stepped part (120) , and the second magnet is provided on the second stepped part (240).

4. The venting device of claim 1, wherein the gap-maintaining member (300) comprises an elastic member (320) installed on at least one of the first stepped part (120) and the second stepped part (240).

5. The venting device of claim 4, wherein the elastic member (320) is a leaf spring.

6. The venting device of claim 1, wherein the plurality of venting holes comprises at least one first venting hole (220) connecting to the outside at both the first and second positions (P1, P2), and at least one second venting hole (230) connecting to the outside only at the second position (P2).

7. The venting device of claim 6, wherein the at least one first venting hole (220) is disposed on an upper surface of the movable member (130).

8. The venting device of claim 6, wherein the at least one second venting hole (230) is disposed on a side surface of the movable member (130).

9. The venting device of claim 6, wherein the at least one first venting hole (220) is a plurality of first venting holes and the at least one second venting hole (230) is a plurality of second venting holes, and a cross-sectional area of each second venting hole is larger than a cross-sectional area of each first venting hole.

10. The venting device of claim 1, further comprises a barrier (400) coupled to the fixed member to support a lower surface of the movable member.

11. The venting device of claim 10, wherein the barrier (400) is an impermeable fiber or a metal foil.

12. The venting device of claim 11, wherein a breaking strength of the barrier (400) is less than the repulsive force.

13. The venting device of claim 7, wherein the at least one first venting hole (220) is a plurality of first venting holes, and
wherein the upper surface of the movable member (130) is provided with one or more fracture portions surrounding the plurality of first venting holes, the fracture portions fracturing upon application of a force in excess of the external force that moves the movable member to the second position.

14. A prismatic secondary battery, comprising:
a case (510), at least one side of which forms an open surface;
at least one battery cell (520) housed within the case;
an electrode terminal (532) electrically connected to an electrode lead of the at least one battery cell;
a terminal plate (530) coupled to the open surface of the case; and
a venting device (10) according to claim 1 coupled to the terminal plate (530).

15. The prismatic secondary battery of claim 14, wherein an O-ring (540) is interposed between an engagement surface of the terminal plate (530) and the venting device (10).

## Patentansprüche

1. Entlüftungsvorrichtung (10), umfassend:
ein fixiertes Element (100), welches mit einem durchgehend hohlen Körper (110) bereitgestellt ist und welches an einer Innenumfangsfläche eines oberen Abschnitts des Körpers (110) mit einem ersten gestuften Teil (120) bereitgestellt ist;
ein bewegliches Element (130), welches in ein Inneres des fixierten Elements (100) eingesetzt ist und beweglich damit gekoppelt ist und welches mit einer Mehrzahl von Entlüftungslöchern (210) bereitgestellt ist; und
einen zweiten gestuften Teil (240) an einer unteren Außenumfangsfläche des beweglichen Elements (130), welcher dem ersten gestuften Teil (120) zugewandt ist; und
ein einen Spalt aufrechterhaltendes Element (300), welches eine Abstoßungskraft zwischen dem fixierten Element (100) und dem beweglichen Element (130) ausübt,
wobei das bewegliche Element (130) zwischen einer ersten Position, welche durch die durch das einen Spalt aufrechterhaltende Element (300) ausgeübte Abstoßungskraft aufrechterhalten wird, und einer zweiten Position, wenn eine äußere Kraft aufgebracht wird, welche die Abstoßungskraft überschreitet, relativ zu dem fixierten Element (100) beweglich ist, und
wobei eine Anzahl von Entlüftungslöchern in dem beweglichen Element (130), welche in der ersten Position (P1) und der zweiten Position (P2) mit dem Äußeren verbunden sind, verschieden ist.

2. Entlüftungsvorrichtung nach Anspruch 1, wobei das einen Spalt aufrechterhaltende Element einen ersten Magneten (310), welcher an dem fixierten Element bereitgestellt ist, und einen zweiten Magneten (312) umfasst, welcher an dem beweglichen Element bereitgestellt ist.

3. Entlüftungsvorrichtung nach Anspruch 2, wobei der erste Magnet (310) an dem ersten gestuften Teil (120) bereitgestellt ist und der zweite Magnet an dem zweiten gestuften Teil (240) bereitgestellt ist.

4. Entlüftungsvorrichtung nach Anspruch 1, wobei das einen Spalt aufrechterhaltende Element (300) ein elastisches Element (320) umfasst, welches an wenigstens einem aus dem ersten gestuften Teil (120) und dem zweiten gestuften Teil (240) installiert ist.

5. Entlüftungsvorrichtung nach Anspruch 4, wobei das elastische Element (320) eine Blattfeder ist.

6. Entlüftungsvorrichtung nach Anspruch 1, wobei die Mehrzahl von Entlüftungslöchern wenigstens ein erstes Entlüftungsloch (220), welches sowohl an der ersten als auch an der zweiten Position (P1, P2) mit dem Äußeren verbunden ist, und wenigstens ein zweites Entlüftungsloch (230) umfasst, welches nur an der zweiten Position (P2) mit dem Äußeren verbunden ist.

7. Entlüftungsvorrichtung nach Anspruch 6, wobei das wenigstens eine erste Entlüftungsloch (220) an einer oberen Fläche des beweglichen Elements (130) angeordnet ist.

8. Entlüftungsvorrichtung nach Anspruch 6, wobei das wenigstens eine zweite Entlüftungsloch (230) an einer Seitenfläche des beweglichen Elements (130) angeordnet ist.

9. Entlüftungsvorrichtung nach Anspruch 6 ,wobei das wenigstens eine erste Entlüftungsloch (220) eine Mehrzahl von ersten Entlüftungslöchern ist und das wenigstens eine zweite Entlüftungsloch (230) eine Mehrzahl von zweiten Entlüftungslöchern ist und eine Querschnittsfläche jedes zweiten Entlüftungslochs größer ist als eine Querschnittsfläche jedes ersten Entlüftungslochs.

10. Entlüftungsvorrichtung nach Anspruch 1, ferner umfassend eine Barriere (400), welche mit dem fixierten Element gekoppelt ist, um eine untere Fläche des beweglichen Elements zu haltern.

11. Entlüftungsvorrichtung nach Anspruch 10, wobei die Barriere (400) eine undurchlässige Faser oder eine Metallfolie ist.

12. Entlüftungsvorrichtung nach Anspruch 11, wobei eine Bruchfestigkeit der Barriere (400) geringer ist als die Abstoßungskraft.

13. Entlüftungsvorrichtung nach Anspruch 7, wobei das wenigstens eine erste Entlüftungsloch (220) eine Mehrzahl von ersten Entlüftungslöchern ist und
wobei die obere Fläche des beweglichen Elements (130) mit einem oder mehreren Bruchabschnitten bereitgestellt ist, welche die Mehrzahl von ersten Entlüftungslöchern umgeben, wobei die Bruchabschnitte auf ein Aufbringen einer Kraft hin brechen, welche größer ist als die äußere Kraft, die das bewegliche Element in die zweiten Position bewegt.

14. Prismatische Sekundärbatterie, umfassend:
ein Gehäuse (510), von welchem wenigstens eine Seite eine offene Fläche bildet;
wenigstens eine Batteriezelle (520), welche innerhalb des Gehäuses aufgenommen ist;
einen Elektrodenanschluss (532), welcher elektrisch mit einer Elektrodenleitung der wenigstens einen Batteriezelle verbunden ist;
eine Anschlussplatte (530), welche mit der offenen Fläche des Gehäuses gekoppelt ist; und
eine Entlüftungsvorrichtung (10) nach Anspruch 1, welche mit der Anschlussplatte (530) gekoppelt ist.

15. Prismatische Sekundärbatterie nach Anspruch 14, wobei ein O-Ring (540) zwischen einer Eingriffsfläche der Anschlussplatte (530) und der Entlüftungsvorrichtung (10) eingefügt ist.

## Revendications

1. Dispositif de ventilation (10), comprenant :
un élément fixe (100) doté d'un corps (110) creux traversant, et doté d'une première partie étagée (120) sur une surface circonférentielle interne d'une partie supérieure du corps (110) ;
un élément mobile (130) inséré dans et couplé de manière mobile à un intérieur de l'élément fixe (100) et doté d'une pluralité de trous de ventilation (210) ; et
une seconde partie étagée (240) sur une surface circonférentielle externe inférieure de l'élément mobile (130) faisant face à la première partie étagée (120) ; et
un élément de maintien d'espace (300) exerçant une force de répulsion entre l'élément fixe (100) et l'élément mobile (130),
dans lequel l'élément mobile (130) est mobile par rapport à l'élément fixe (100) entre une première position maintenue par la force de répulsion exercée par l'élément de maintien d'espace (300), et une seconde position lorsqu'une force externe dépassant la force de répulsion est appliquée, et
dans lequel un nombre de trous de ventilation dans l'élément mobile (130) reliés à l'extérieur dans la première position (P1) et la seconde position (P2) est différent.

2. Dispositif de ventilation selon la revendication 1, dans lequel l'élément de maintien d'espace comprend un premier aimant (310) prévu sur l'élément fixe et un second aimant (312) prévu sur l'élément mobile.

3. Dispositif de ventilation selon la revendication 2, dans lequel le premier aimant (310) est prévu sur la première partie étagée (120), et le second aimant est prévu sur la seconde partie étagée (240).

4. Dispositif de ventilation selon la revendication 1, dans lequel l'élément de maintien d'espace (300) comprend un élément élastique (320) installé sur au moins une parmi la première partie étagée (120) et la seconde partie étagée (240).

5. Dispositif de ventilation selon la revendication 4, dans lequel l'élément élastique (320) est un ressort à lames.

6. Dispositif de ventilation selon la revendication 1, dans lequel la pluralité de trous de ventilation comprend au moins un premier trou de ventilation (220) relié à l'extérieur à la fois au niveau des première et seconde positions (P1, P2), et au moins un second trou de ventilation (230) relié à l'extérieur uniquement au niveau de la seconde position (P2).

7. Dispositif de ventilation selon la revendication 6, dans lequel l'au moins un premier trou de ventilation (220) est disposé sur une surface supérieure de l'élément mobile (130).

8. Dispositif de ventilation selon la revendication 6, dans lequel l'au moins un second trou de ventilation (230) est disposé sur une surface latérale de l'élément mobile (130).

9. Dispositif de ventilation selon la revendication 6, dans lequel l'au moins un premier trou de ventilation (220) est une pluralité de premiers trous de ventilation et l'au moins un second trou de ventilation (230) est une pluralité de seconds trous de ventilation, et une surface de section transversale de chaque second trou de ventilation est supérieure à une surface de section transversale de chaque premier trou de ventilation.

10. Dispositif de ventilation selon la revendication 1 comprenant en outre une barrière (400) couplée à l'élément fixe pour soutenir une surface inférieure de l'élément mobile.

11. Dispositif de ventilation selon la revendication 10, dans lequel la barrière (400) est une fibre imperméable ou une feuille métallique.

12. Dispositif de ventilation selon la revendication 11, dans lequel la résistance à la rupture de la barrière (400) est inférieure à la force de répulsion.

13. Dispositif de ventilation selon la revendication 7, dans lequel l'au moins un premier trou de ventilation (220) est une pluralité de premiers trous de ventilation, et dans lequel la surface supérieure de l'élément mobile (130) est pourvue d'une ou plusieurs portions de fracture entourant la pluralité de premiers trous de ventilation, les portions de fracture se fracturant lors de l'application d'une force excédant la force externe qui déplace l'élément mobile vers la seconde position.

14. Batterie secondaire prismatique, comprenant :
un boîtier (510), dont au moins un côté forme une surface ouverte ;
au moins un élément de batterie (520) logé à l'intérieur du boîtier ;
une borne d'électrode (532) connectée électriquement à un fil d'électrode de l'au moins un élément de batterie ;
une plaque de terminaison (530) reliée à la surface ouverte du boîtier ; et
un dispositif de ventilation (10) selon la revendication 1 couplé à la plaque de terminaison (530).

15. Batterie secondaire prismatique selon la revendication 14, dans laquelle un joint torique (540) est interposé entre une surface de mise en prise de la plaque de terminaison (530) et le dispositif de ventilation (10).
